# EUROPEAN PATENT APPLICATION

(11) **EP 2 017 488 A1**
(43) Date of publication of application: **21.01.2009**
(21) Application number: 07014241.9
(22) Date of filing: 20.07.2007
(51) Int. Cl.: F16D 7/02, F16B 21/18

(54) **Compact clutch assembly method and apparatus**

(71) Applicant: Visiocorp Patents S.à.r.l., 1653 Luxembourg (LU)
(72) Inventor: Ome, Simon, Hallett Cove South Australia 5158 (AU)
(74) Representative: Rausch, Gabriele

(57) **Abstract**

The invention provides a clutch assembly including a drive shaft; a torque transmission member co-axially mounted to the drive shaft; a clutch member operably connected to or integral with the torque transmission member, the clutch member having a first friction face; a disc spring mounted around the drive shaft and having a second friction face engaging the first friction face; a resilient retainer retaining the spring in a compressed condition in which the first and second friction faces are compressed together to allow torque transmission, wherein the retainer includes a fractured ring having first and second ends resulting from the fracture, the ends adjacent and biased towards each other.

## Description

### FIELD OF THE INVENTION

The invention relates to a compact clutch assembly. In particular, the invention relates to clutch assemblies of the type found in vehicle external mirror motor mechanisms and the like.

### BACKGROUND

In automotive applications for instance, small motors, usually electric motors, are provided to drive or actuate various components including external mirrors. Often there is a need for a clutch mechanism to allow a gear train to slip. There are a number of reasons for this. One reason is that many reduction gear trains are non-back drivable. For instance gear trains having worm drives are generally non-back drivable. This means that if an attempt is made to manually move a component that is usually actuated through the gear train, that the gear train can be damaged unless some form of clutch is provided.

Various compact clutching mechanisms are known to allow drive train slippage. One type of clutch assembly employs a disc spring having a friction face forced against a corresponding friction face on another drive train member. Disc springs are compact and low cost. In order to provide low cost light weight drive trains, gears constructed from polymers including various plastics are commonly employed. With plastics, at least in comparison with metals, it can be difficult to achieve required manufacturing tolerances. With disc springs, generally relatively small displacements can result in significant changes in force. Therefore, retaining or holding a disc spring using a plastic retainer can prevent tolerance difficulties.

It is an object of the invention to provide a method of assembly and an apparatus that assists in overcoming the aforementioned tolerance problems or at least provide a useful alternative to that of the prior art.

### SUMMARY OF THE INVENTION

According to a first aspect of the invention there is provided a method of assembling a clutch assembly including the steps of:
providing a clutch member mounted to a drive shaft, the shaft having a shoulder or shoulders, the clutch member having a first friction face;
mounting a disc spring having a second friction face around the shaft so that the second friction face is engageable with the first friction face;
forcing an annular retainer in an axial direction against the shoulder(s) and the spring so as to create sufficient hoop stress to create a fracture through the retainer, the fracture allowing the retainer to expand and pass over the shoulder(s),
whereby the fractured retainer seats between the shoulder(s) and the spring, thereby retaining the spring.

According to a second aspect of the invention there is provided a clutch assembly including:
a drive shaft;
a torque transmission member co-axially mounted to the drive shaft;
a clutch member operably connected to or integral with the torque transmission member, the clutch member having a first friction face;
a disc spring mounted around the drive shaft and having a second friction face engaging the first friction face;
a resilient retainer retaining the spring in a compressed condition in which the first and second friction faces are compressed together to allow torque transmission,
wherein the retainer includes a fractured ring having first and second ends resulting from the fracture, the ends adjacent and biased towards each other.

Preferably the retainer is constructed from plastic which a llows a low xost and light version of the device.

Preferably the plastic includes a stiffening additive.

Preferably the stiffening additive is carbon.

Various plastics including nylon and Polytetrafluoroethylene (PTFE), may be used.

Preferably the torque transmission member is a gear.

A specific embodiment of the invention will now be described in some further detail with reference to and as illustrated in the accompanying figures. This embodiment is illustrative, and is not meant to be restrictive of the scope of the invention.

### DETAILED DESCRIPTION OF PREFERRED EMBODIMENT OF THE INVENTION

A preferred embodiment of the invention is illustrated in the accompanying representations in which:
Figure 1 is an isometric view of a compact clutch assembly according to the invention.
Figure 2 is an exploded view of the assembly of Figure 1.
Figure 3 is a front end view of the assembly of Figure 1.
Figure 4 is a side view of the assembly of Figure 1.
Figure 5 is a rear end view of the assembly of Figure 1.

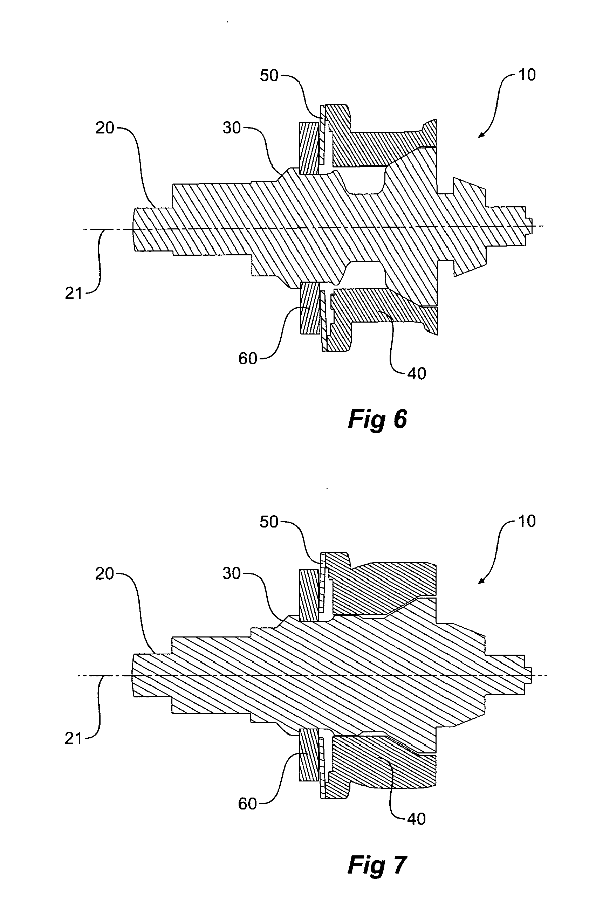

Figure 6 is a cross sectional view through section lines 6-6 shown on Figure 3.
Figure 7 is a cross sectional view through section line 7-7 shown on Figure 4.
Figure 8 is an isometric view of a retaining ring component of the assembly of Figure 1.
Figure 9 is an end view of the retainment of Figure 8
Figure 10 is a cross sectional view through section line 10-10 shown on Figure 9.

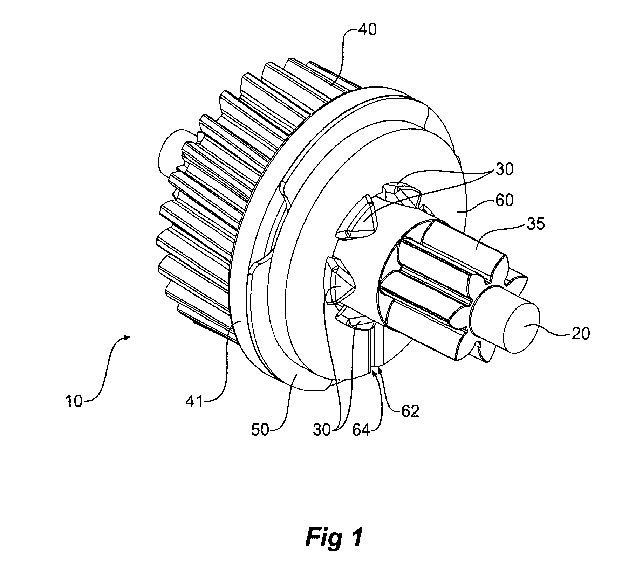

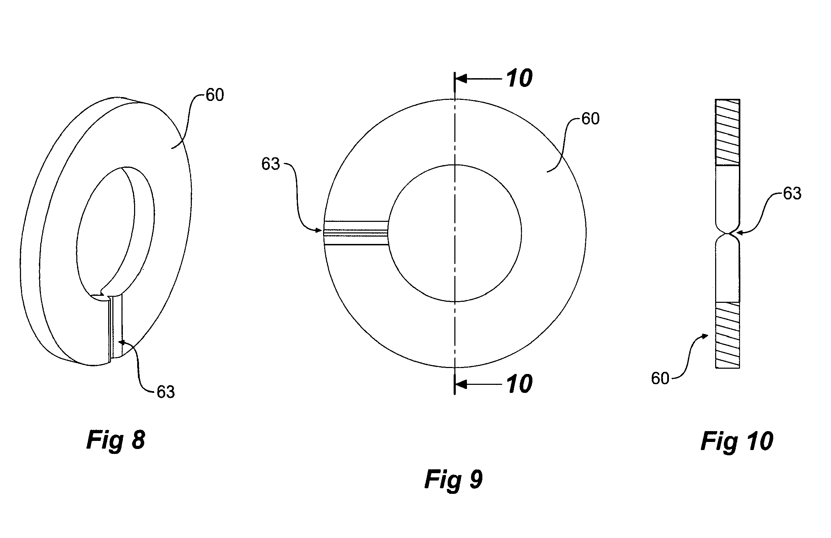

Figures 10, 11 and 12 show progressive assembly of the assembly of figure 1 in cross-sectional view.

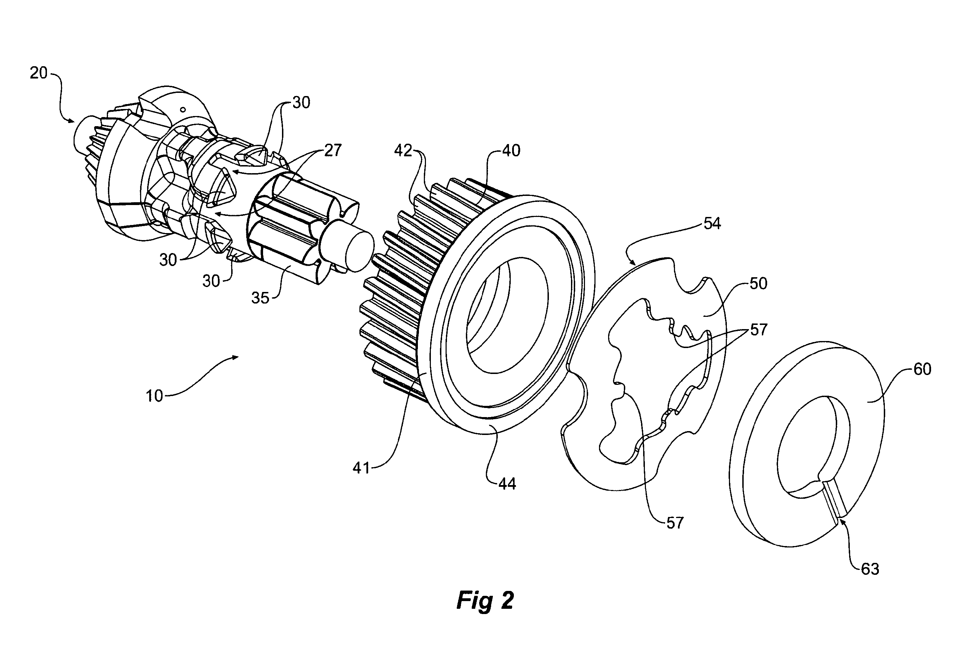

Referring to Figures 1 and 2, a clutch assembly 10 according to the invention is shown. The assembly 10 includes a drive shaft 20, the shaft 20 having a plurality of shoulders 30. A torque transmission member the form of a helical gear 40 is coaxially mounted to the drive shaft 20. A clutch member 41 is integral with the gear 40 and has a first friction face 44. In other embodiments of the invention (not shown) the clutch member 41 maybe separate from the torque transmission member 40. A disc spring 50, most clearly shown in Figure 2, is mounted around the drive shaft 20 and has a second friction face 54 engaging the first friction face 44. A resilient retainer retains the disc spring 50 in a compressed condition in which the first and second friction face is 44 and 54 are compressed together to allow torque transmission between the shaft 20 and the gear 40.

The retainer is characterised in that it includes a fractured ring having first and second ends 62 and 64, the ends resulting from a fracture and the ends being biased towards each other. The ends 62 and 64 are biased toward each other by the resilience of the material from which the retainer 60 is constructed.

The retainer 60 can be constructed from various materials. In the embodiment of the invention shown, the retainer is constructed from plastic including a stiffening additive.

Stiffening additives such as carbon and glass fibre may be used. Various plastics including nylon and Polytetrafluoroethylene (PTFE), may be used.

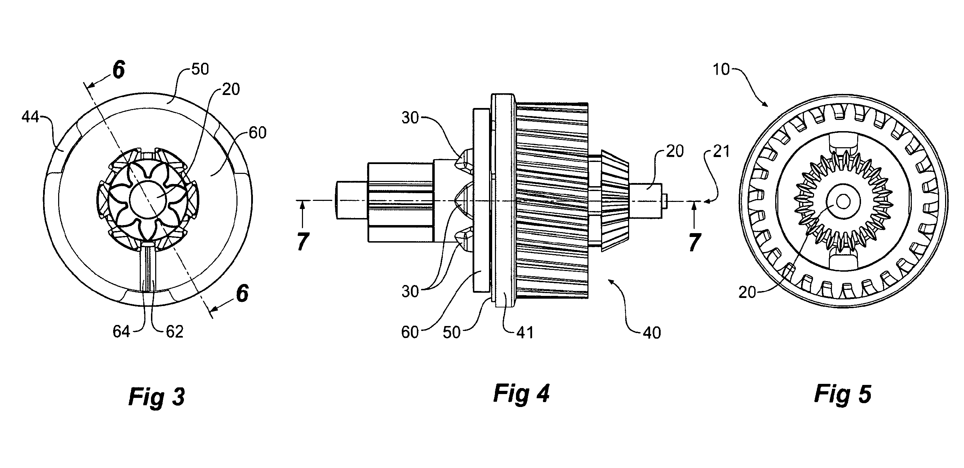

Referring now to Figure 4, operation of the compact clutch assembly will now be described. A worm gear (not shown) directly mounted to the electric motor shaft is operably connected to the gear 40 to drive it around the axis 21 of the shaft 20. A double reduction worm gear train is employed between the motor and gear 40 to achieve the desired gearing.

In normal operation, the shaft 20 rotates with the gear 40 by virtue of the friction between the first friction face 44 of the clutch area 41 of the gear 40 engaging with the second friction face 54 on the disc spring 50. The disc spring 50 is keyed to the shaft 20 by virtue of tabs 57 that key into corresponding slots 27 on shaft 20 as can most clearly can be seen in Figures 2 and 3. Output gear 35 is keyed to the disc spring 50 through slots 27. Thus, as the disc spring 50 rotates with the gear 40, the output gear 35 also rotates. The output gear 35 mates with a rack (not shown) that drives a mirror (not shown). When an operator manually moves the mirror thereby causing the rack to drive the output gear 35, the disc spring 50 slips against the friction face 44 of the gear and clutch components 40 and 41. This slippage prevents damage of the non back drivable worm gear meshing with the gear 40.

It is important that the disc spring 50 is correctly compressed between the friction face 44 of the clutch member 41 and the retainer 60 so that an appropriate level torque can be transmitted without slippage. There must be sufficient torque to allow the drive train to drive the mirror against secretions such as dirt and ice. On the other hand, the torque transmission should not be too high otherwise damage may occur to the drive train when an operator manually attempts to override the mechanism by pressing on the surface of the mirror glass. The retainer 60 of the invention is important in achieving the goal of appropriate torque transmission (that is torque transmission within a specified tolerance).

Referring now to Figures 8, 9 and 10, the retainer 60 is shown in more detail. The retainer 60 includes a necked region 63 that will preferentially fracture when sufficient hoop stress is applied.

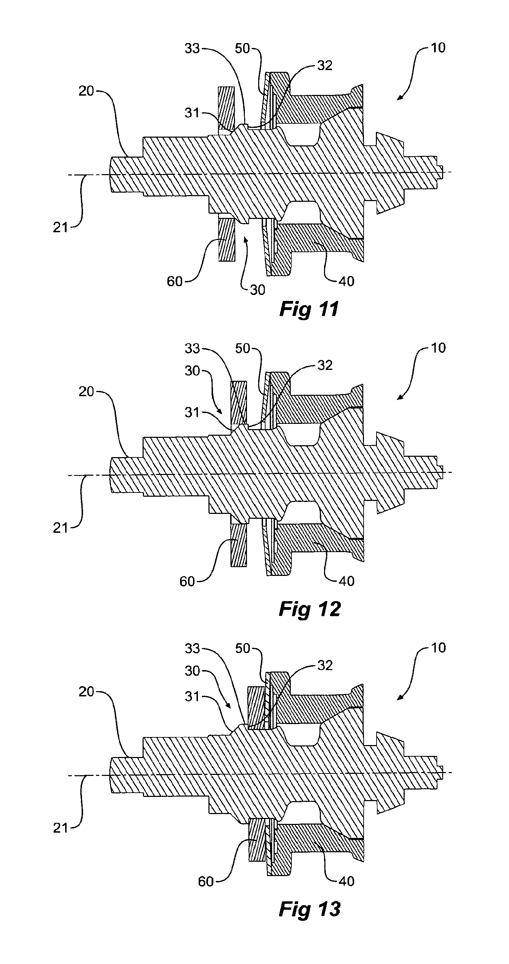

The method of assembling the compact clutch assembly according to the invention will now be described with reference to Figures 2, 11, 12 and 13. A clutch member 41 mounted around a drive shaft 20 is provided. The clutch member has a first friction face 44. A disc spring 50 is mounted around the shaft so that a second friction face 54 is engagable with the first friction face 44. An annular retainer 60 is then forced in an axial direction against the ramped faces 31 of the shoulders 30 and the spring 50 so as to create sufficient hoop stress to create a fracture through the retainer 50, at necked region 63, the fracture allowing the retainer 50 to expand and pass over the shoulders 30. This is shown progressively in Figures 11, 12 and 13.

The necked area 63 of the retainer 60 is designed such that it acts as a complete hoop during assembly to enable the retainer 60 to centralise itself on the ramped faces 31 of the shoulders 30. Once the retainer 60 has centralised itself with respect to the ramped surfaces 31 and the drive shaft axis 21, the assembly force progressively increases and the retainer splits at the necked area 63.

After fracturing and passing over the shoulders 30 the newly formed ends 62 and 64 (shown in Figure 1) snap towards each other due to the resilience of the retainer 60. The fractured retainer 60 is then seated between the undercut faces 32 of the shoulders 30 and the disc spring 50 to thereby retain the spring 50 as is shown in Figure 1.

Referring to Figure 12, the retainer 60 is shown in its fractured state passing over the outer faces 33 of the shoulders 30. Because the retainer 60 is now fractured, the compressive force it exerts on the outer faces 33 of the shoulders 30 is relatively small. This ensures that damage to the shoulders 30 is minimised and that the exact position of the retainer 60 when it reaches the position under the undercut face 32 is predictable and controllable. This in turn means that the degree of compression of the spring 50 between the retainer 60 and the gear 40 is predictable and controllable.

The afore-mentioned centralising of the retainer 60 and subsequent splitting of the retainer 60 eliminates or at least reduces damage to the ramped faces 31, the outer faces 33 and the under cut faces 32 of the shoulders 30. The effect of this is to more predictably and controllably compress the spring 50 between the retainer 60 and the gear 40. In turn, this means that the clutch force can be more accurately set therefore enabling mass production of the clutch assembly 10 while meeting exacting torque transmission and clutching characteristics.

While the present invention has been described in terms of preferred embodiments in order to facilitate better understanding of the invention, it should be appreciated that the various modifications can be made without departing from the principles of the invention. Therefore, the invention should be understood to include all such modifications within its scope.

## Claims

**1.** A method of assembling a clutch assembly (10) including the steps of:
providing a clutch member mounted to a drive shaft (20), the shaft having a shoulder or shoulders (30), the clutch member having a first friction face (44);
mounting a disc spring (50) having a second friction face (54) around the shaft so that the second friction face (54) is engageable with the first friction face (44);
forcing an annular retainer (60) in an axial direction against the shoulder(s) (30) and the spring (50) so as to create sufficient hoop stress to create a fracture through the retainer, the fracture allowing the retainer to expand and pass over the shoulder(s) (30),
whereby the fractured retainer seats between the shoulder(s) and the spring (50), thereby retaining the spring (50).

**2.** A clutch assembly including:
a drive shaft (20);
a torque transmission member (40) co-axially mounted to the drive shaft;
a clutch member (41) operably connected to or integral with the torque transmission member (40), the clutch member (41) having a first friction face (44);
a disc spring (50) mounted around the drive shaft (20) and having a second friction face (54) engaging the first friction face (44);
a resilient retainer (60) retaining the spring (50) in a compressed condition in which the first and second friction faces are compressed together to allow torque transmission,
**characterised in that** the retainer (60) includes a fractured ring having first and second ends (62, 64) resulting from the fracture, the ends adjacent and biased towards each other.

**3.** A clutch assembly according claim 2 wherein the retainer is constructed from plastic.

**4.** A clutch assembly according claim 2 wherein the plastic includes a stiffening additive.

**4.** A clutch assembly according claim 2 wherein the stiffening additive is carbon.

**5.** A clutch assembly according claim 4 wherein plastics including nylon and Polytetrafluoroethylene (PTFE)

**6.** A clutch assembly according claim 2 wherein the torque transmission member (40) is a gear.
